# EUROPÄISCHE PATENTANMELDUNG

(11) **EP 0 569 991 A1**
(43) Veröffentlichungstag der Anmeldung: **18.11.1993**
(21) Anmeldenummer: 93107833.1
(22) Anmeldetag: 13.05.1993
(51) Int. Cl.: B60H 1/22

(54) **Innenraumheizanlage für Kraftfahrzeuge**

(30) Priorität: 14.05.1992 DE 4215976
(71) Anmelder: MAGNET-MOTOR GESELLSCHAFT FÜR MAGNETMOTORISCHE TECHNIK MBH, D-82319 Starnberg (DE)
(72) Erfinder: Ehrhart, Peter, Dr., D-81375 München (DE)
(74) Vertreter: Klunker . Schmitt-Nilson . Hirsch

(57) **Zusammenfassung**

Speziell bei einem nicht-spurgebundenen Kraftfahrzeug mit elektrischem Fahrantrieb (11,13), der von einer Verbrennungsmotor-/Generatoreinheit (6) gespeist wird, wird der Innenraum des Fahrzeuges von einzelnen elektrischen Heiz-/Kühlelementen (15a,15b...15d) geheizt oder gekühlt. Diese Heizelemente können die konventionellen Heizanlagen, welche mittels eines Wasser-/Luftwärmetauschers die Abwärme eines Verbrennungsmotors nutzen, ersetzen oder als Zusatzheizung für konventionelle Heizanlagen eingesetzt werden. Der Platzbedarf für die elektrischen Heiz-/Kühlelemente ist wesentlich geringer als der Platzbedarf für die Heizluftrohre und den Wasser-/Luftwärmetauscher bei den herkömmlichen Anlagen.

## Beschreibung

Die Erfindung betrifft eine Innenraumheizanlage für nicht-spurgebundene, nicht rein batteriebetriebene und nicht durch externe elektrische Netzenergie betriebene Kraftfahrzeuge.

Bislang war es üblich, den Innenraum eines nichtspurgebundenen Kraftfahrzeuges, z.B. eines Pkws, eines Lkws, eines Busses oder dergleichen, mittels eines Wärmetauschers durch die Abwärme des Verbrennungsmotors des Fahrzeuges zu beheizen.

Die Erfindung bezieht sich nicht auf Fahrzeuge mit reinem Batteriebetrieb, auch nicht auf Fahrzeuge mit Solarantrieb, und auch nicht auf Fahrzeuge, deren Elektroantrieb von einem externen elektrischen Netz gespeist wird (O-Busse). Diesen letztgenannten Fahrzeugen ist gemeinsam, daß, falls eine Innenraumheizanlage vorgesehen ist, diese naturgemäß als elektrische Heizanlage ausgebildet sein muß.

Bei üblichen Heizanlagen für Kraftfahrzeuge ist ein Wasser-/Luftwärmetauscher im Kühlkreislauf des Verbrennungsmotors angeordnet, und von diesem Wärmetauscher führen mehrere Heizluftschläuche zu Austrittsöffnungen, die in den Fahrgastraum münden. Es können auch mehrere Wasser-/Luftwärmetauscher vorhanden sein.

Solange sich die Austrittsöffnungen für die Heizluft in nicht allzu großer Entfernung von dem Motor bzw. dem Wasser-/Luftwärmetauscher befinden, erfordert eine solche Heizanlage einen mäßigen Aufwand an Wasser- und Luftschläuchen.

Bei komfortableren Heizungen, die den Fahrgastraum intensiv und dabei gleichmäßig zu erwärmen vermögen, ist jedoch ein erheblicher Aufwand zur Führung der Heizluft notwendig.

Abgesehen von den durch Material- und Montageaufwand bedingten erheblichen Kosten, ist auch der beträchtliche Platzbedarf für die Wasser-/Heizluftschläuche störend, da speziell in modernen Fahrzeugen eine mehr und mehr kompaktere Bauweise angestrebt wird.

Besonders gravierend ist der Aufwand dann, wenn z.B. bei einem Fahrzeug mit Frontmotor der Fond des Fahrgastraums gezielt beheizt werden soll. Dann müssen nämlich beträchtlich lange Leitungen für die Heizluft gelegt werden.

Durch Installation mehrerer der obengenannten Wasser-/Luftwärmetauscher wird dieses Problem nicht gelöst, da ein zusätzlicher Platzbedarf für Heißwasserleitungen mit Isolation und dergleichen besteht.

Ein weiteres Problem bei den herkömmlichen Heizungsanlagen ist die Dosierung der aus den einzelnen Heizluftöffnungen austretenden Heizluft sowie deren Temperatur. Im allgemeinen kann man zwar mit Hilfe zentral angeordneter Stellelemente die Temperatur der in den Fahrgastraum eintretenden heißen Luft einstellen und außerdem das Verhältnis der oben, in der Mitte, und unten in den Fahrgastraum eintretenden Luftmenge wählen, zur Feineinstellung sind jedoch an einzelnen Heizluft-Austrittsöffnungen zusätzliche Klappen und Schieber vorgesehen. Weil diese im Inneren des Fahrgastraums verteilt angeordnet sind, sind sie z.B. vom Fahrersitz aus nur zum Teil zugänglich.

Der Erfindung liegt die Aufgabe zugrunde, eine Innenraumheizanlage für Kraftfahrzeuge anzugeben, mit der eine umfassende, gezielte und gleichmäßige Beheizung des Innenraums des Fahrzeugs möglich ist, wobei gleichzeitig der Platzbedarf für die Heizung insgesamt verringert ist.

Gelöst wird diese Aufgabe erfindungsgemäß durch mehrere elektrische Heizelemente, die an verschieden Stellen im Bereich des Fahrzeug-Innenraums angeordnet sind und von einer elektrischen Energieversorgungsanlage gespeist werden.

Die Heizelemente können im einfachsten Fall elektrische Widerstandselemente sein, die an geeigneten Stellen angeordnet sind, und denen über Stromkabel elektrische Energie zugeführt wird. Die elektrische Energieversorgungsanlage ist so ausgelegt, daß sie dem größten zu erwartenden Wärmebedarf entspricht.

Damit auch die Abwärme des Verbrennungsmotors genutzt wird, sieht die Erfindung insbesondere vor, daß die Anlage als Zusatzheizung in Verbindung mit einer prinzipiell konventionellen Verbrennungsmotorabwärme-Heizung vorgesehen ist.

Bei einer "allelektrischen" Beheizung können die früher üblichen Wasser-/Luftwärmetauscher völlig entfallen, ebenso sämtliche Heizluftrohre. Wird die erfindungsgemäße Heizanlage als Zusatzheizung für eine konventionelle Heizung verwendet, so können der Wasser-/Luftwärmetauscher und die Heizluftrohre wesentlich kleiner dimensioniert werden.

Die Erfindung bietet eine Reihe von Vorteilen: Die Übertragung der zum Heizen verwendeten elektrischen Energie von der elektrischen Energieversorgungsanlage zu den einzelnen elektrischen Heizelementen erfolgt praktisch verlustlos über die elektrischen Kabel. Der Platzaufwand für die Kabel und die Heizelemente selbst ist vergleichsweise gering. Durch die Erfindung ist es möglich, den Innenraum eines Fahrzeugs auch an solchen Stellen gezielt zu beheizen, an denen bislang praktisch keine Heizluft-Austrittsöffnungen vorgesehen werden konnten. Die elektrischen Heizelemente lassen sich im Bereich des Fahrzeugbodens, des Dachhimmels, der Scheiben und an sonstigen Stellen anordnen.

Man kann insbesondere zur schnellen Anwärmung der Luft einzelnen elektrischen Heizelementen einen Lüfter zuordnen, z.B. in Form eines elektrisch betriebenen Ventilators oder in Form einer Luftdüse. Allerdings besteht ein besonderer Vorteil der erfindungsgemäßen Heizvorrichtung auch gerade darin, daß die Wärmeabgabe zugluftfrei erfolgt.

Die Verwendung elektrischer Heizelemente in einem Kraftfahrzeug ist an sich nicht neu. So ist es z.B. bekannt, elektrische Sitzheizungen vorzusehen und/oder Außenspiegel, Türschlösser und die Heckscheibe elektrisch zu beheizen. Diese bekannten Beheizungen dienen jedoch nicht der Erwärmung des Innenraums eines Kraftfahrzeuges, sondern dienen als Flächenheizungen und haben insbesondere die Aufgabe, ein Beschlagen oder Vereisen einzelner Elemente des Fahrzeugs zu vemeiden.

Durch die erfindungsgemäße Ausgestaltung der Innenraumheizanlage werden oben angegebenen Vorteile sowie weitere, unten noch näher erläuterte Vorteile erzielt.

Wie oben erwähnt, ist zur Realisierung der erfindungsgemäßen Innenraumheizanlage die elektrische Energieversorgungsanlage des Kraftfahrzeuges entsprechend dimensioniert. Insbesondere findet die erfindungsgemäße Anlage Verwendung in einem Fahrzeug, das mit einem elektrischen Fahrantrieb mit Energieversorgung durch eine Verbrennungsmotor-/Generatoreinheit ausgerüstet ist. Alternativ findet die Erfindung Anwendung bei einem Fahrzeug mit einem elektrischen Fahrantrieb mit Energieversorgung durch eine Kombination aus einem chemischen Speicher und einer Verbrennungsmotor-/Generatoreinheit oder durch eine Kombination aus Schwungradspeicher und Verbrennungsmotor-/Generatoreinheit.

Derartige Fahrzeuge besitzen als Primärantriebsquelle einen Verbrennungsmotor, jedoch erfolgt die Kraftübertragung auf die angetriebenen Räder nicht durch eine mechanische Kraftübertragung, sondern elektrisch. Hierzu ist mit dem Verbrennungsmotor eine Generatoreinheit gekoppelt. Zusätzlich kann ein chemischer Speicher oder Schwungradspeicher vorhanden sein. Die Kopplung zwischen dem Speicher und dem Generator kann in beide Richtungen realisiert sein, so daß der Generator den Speicher aufladen kann und umgekehrt der Generator dem Speicher elektrische Energie entnehmen kann. Dabei werden vorzugsweise zwei oder vier angetriebene Räder des Fahrzeugs durch individuelle Elektromotoren angetrieben, die ihrerseits über eine Leistungselektronik von dem Generator bzw. dem chemischen Speicher gespeist werden. Die Leistungselektronik-Einheit kann außerdem in Verbindung mit einer geeigneten Steuerung dazu dienen, beispielsweise bei einem Bremsvorgang elektrische Energie zu gewinnen. Diese Energie kann dann in dem Speicher gespeichert werden. Dabei arbeiten die Antriebsmotoren dann als Generatoren. Insbesondere handelt es sich bei den Antriebsmotoren um permanentmagnetisch erregte und elektronisch kommutierte Elektromotoren.

Besonders günstig ist der Einsatz der Erfindung dann, wenn die Heizelemente als Heiz-/Kühlelemente, z.B. als Peltier-Elemente, ausgebildet sind. In diesem Fall können die Elemente wahlweise als Heizelemente oder als Kühlelemente betrieben werden. Die elektrischen Heiz- oder Heiz-/Kühlelemente werden von einer elektronischen Steuerung vorzugsweise individuell elektrisch geregelt.

Hierdurch wird eine Klimaanlage für ein Kraftfahrzeug geschaffen, die gegenüber herkömmlichen Anlagen eine Reihe von Vorteilen aufweist. Bei den üblichen Klimaanlagen wird von einem Wärmetauscher eines Kühlaggregats ein Frischluft- oder Umluftstrom gekühlt, und die kalte Luft strömt in den Fahrgastraum. Zwar kann man mit den erfindungsgemäßen Heiz-/Kühlelementen in Verbindung mit einer Luftdüsenanordnung auch einen Kaltluftstrom erzeugen; weil ein kalter Luftstrom häufig jedoch als unerwünschte Zugluft empfunden wird, haben die erfindungsgemäßen Elemente den Vorteil, daß eine praktisch zugfreie Kühlung erfolgen kann.

Durch die elektrische Ausführung der Heizelemente bzw. der Heiz-/Kühlelemente läßt sich eine individuelle Regelung der Heiz-/Kühlleistung der einzelnen Elemente auf elektrischem Wege erreichen, und zwar durch eine zentrale Steuerung, in die der Fahrer des Fahrzeugs über eine Bedienungstastatur oder dergleichen bequem die gewünschten Werte eingeben kann, da vom Fahrersitz weit entfernte Schieber, Klappen und dergleichen an einzelnen Luftaustrittsöffnungen entfallen können.

Der Ersatz herkömmlicher Klimaanlagen durch die erfindungsgemäßen elektrischen Heiz-/Kühlelemente bringt nicht nur eine erhebliche Platzersparnis mit sich, da die herkömmlichen Kühlaggregate viel Platz beanspruchen, sondern besonders vorteilhaft ist der Aspekt der verringerten Umweltbelastung.

Die bisherigen Kühlaggregate arbeiten mit einem Kühlmittel auf FCKW-Basis oder einem entsprechenden Ersatzstoff. Solange diese Kühlmittel sich noch hermetisch abgeschlossen im Kühlkreislauf der Kühlaggregate befinden, richten sie keinen Schaden an. Problematisch sind diese Stoffe aber - ähnlich wie bei ausgemusterten Kühlschränken - bei Autowracks. Wenn Kraftfahrzeuge mit herkömmlichen Klimaanlagen z.B. in einer Schredderanlage verarbeitet werden, gelangt das Kühlmittel ins Freie, wo die FCKW in die Atmosphäre gelangen und zur Zerstörung der Ozonschicht beitragen.

Da bei der erfindungsgemäßen Anlage kein konventionelles Kühlaggregat eingesetzt wird, treten diese Probleme nicht auf.

Durch die individuelle elektrische Regelung der Heizelemente bzw. der Heiz-/Kühlelemente können bestimmte Bereiche des Kraftfahrzeug-Innenraums gezielt derart beheizt werden, daß die jeweils angenehmste Innentemperatur herrscht. Hierzu werden erfindungsgemäß die Heiz-/Kühlelemente abhängig von der im Fahrzeug-Innenraum gewünschten Soll-Temperatur und/oder im Fahrzeug-Innenraum herrschenden Ist-Temperatur und/oder der Außentemperatur und/oder der verfügbaren elektrischen Leistung geregelt. Man kann die Nenn-Leistung der Heizelemente bzw. der Heiz-/Kühlelemente entsprechend ihrem Installationsort auslegen. Dort, wo besonders viel Heizleistung erforderlich ist, werden entsprechend größer dimensionierte Elemente oder mehrere Elemente angeordnet.

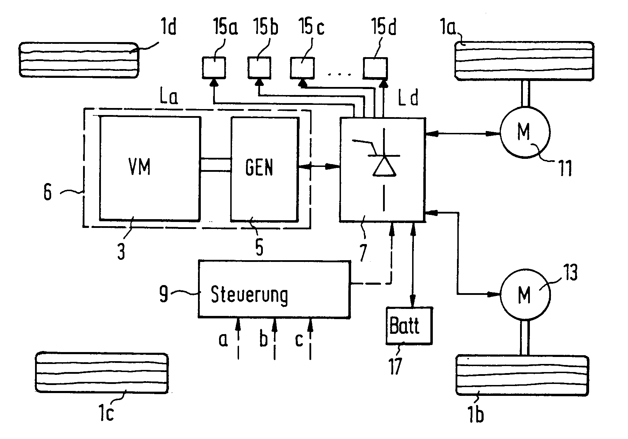

Im folgenden wird ein Ausführungsbeispiel der Erfindung anhand der Zeichnung näher erläutert. Die einzige Figur zeigt ein Blockschaltbild eines Personen-Kraftfahrzeuges mit elektrischem Fahrantrieb bei Energieversorgung durch eine Verbrennungsmotor-/Generatoreinheit.

In der Zeichnung sind lediglich die hier interessierenden Teile eines Personen-Kraftfahrzeuges dargestellt. Von den vier Rädern 1a..., 1d des Kraftfahrzeuges werden lediglich die gelenkten Vorderräder 1a und 1b individuell von Elektromotoren 11 und 13 angetrieben. Die identisch ausgebildeten Elektromotoren 11 und 13 sind als permanentmagnetisch erregte und elektronisch kommutierte Elektromotoren ausgeführt, die auch als Generatoren arbeiten können.

Ein Verbrennungsmotor 3, z.B. ein Dieselmotor, bildet in Verbindung mit einem elektrischen Generator 5 eine Verbrennungsmotor-/Generatoreinheit 6, in der der Verbrennungsmotor 3 mechanisch mit dem Generator 5 gekoppelt ist.

Der Generator liefert elektrische Energie an eine hier nur schematisch skizzierte Leistungselektronik 7, die von einer elektronischen Steuerung 9 gesteuert wird.

Die elektronische Steuerung 9 empfängt als Eingangssignale u.a. ein Fahrsignal a, z.B. von einem Fahrhebel, über den die gewünschte Geschwindigkeit des Fahrzeugs eingestellt wird (entsprechend einem "Gaspedal" eines herkömmlichen Kraftfahrzeuges). Abhängig von dem Fahrsignal a liefert die Steuerung 9 an die Leistungselektronik 7 ein Steuersignal, aufgrund dessen die Leistungselektronik 7 die Elektromotoren 11 und 13 speist, um die Räder 1a und 1b anzutreiben. (Beim Bremsen des Fahrzeugs können die Elektromotoren 11 und 13 als Generatoren arbeiten und über die Leistungselektronik 7 Energie in eine Batterie 17 zurückspeichern, von der auch Energie zum Antreiben der Motoren entnommen werden kann.)

An die Leistungselektronik sind über Leitungen La... Ld einzelne Heiz-/Kühlelemente 15a, 15b, 15c... 15d angeschlossen. Diese Elemente sind hier als Peltier-Elemente ausgeführt.

Die Steuerung 9 empfängt von einem im Armaturenbrett des Fahrzeugs befindlichen Wählhebel ein Temperatur-Sollsignal b, und die Steuerung empfängt von einem im Fahrgastraum befindlichen, in der Zeichnung nicht dargestellten Temperaturfühler ein Temperatur-Istsignal c. Die Steuerung 9 gibt, abhängig von der Temperaturdifferenz, ein Stellsignal an die Leistungselektronik 7, die dann ihrerseits die Heiz-/Kühlelemente 15a... 15d individuell mit Strom versorgt, welcher dem Generator 5 und/oder der Batterie 17 oder auch direkt den Motoren 11 und 13 (beim Bremsbetrieb) entnommen wird.

Die Heiz-/Kühlelemente 15a... 15d sind an verschiedenen Stellen des Innenraums des Kraftfahrzeuges angeordnet, z.B. im Fußbodenbereich, im Türenbereich, im Bereich des Dachhimmels und dergleichen. Durch die individuelle Ansteuerung der Heiz-/Kühlelemente 15a... 15d läßt sich der gesamte Innenraum des Fahrzeugs optimal beheizen/kühlen.

## Patentansprüche

1. Innenraumheizanlage für nicht-spurgebundene, nicht rein batteriebetriebene und nicht durch externe elektrische Netzenergie angetriebene Kraftfahrzeuge,
**gekennzeichnet durch**
mehrere elektrische Heizelemente (15a...15d), die an verschiedenen Stellen im Bereich des Fahrzeug-Innenraums angeordnet sind und von einer elektrischen Energieversorgungsanlage (5,6,7) gespeist werden.

2. Anlage nach Anspruch 1,
**dadurch gekennzeichnet,**
daß die Anlage als Zusatzheizung in Verbindung mit einer prinzipiell konventionellen Verbrennungsmotorabwärme-Heizung vorgesehen ist.

3. Anlage nach Anspruch 1 oder 2 für ein Fahrzeug, das mit einem elektrischen Fahrantrieb (11,13) mit Energieversorgung durch eine Verbrennungsmotor-/Generatoreinheit (6) ausgerüstet ist.

4. Anlage nach Anspruch 1 oder 2 für ein Fahrzeug, das mit einem elektrischen Fahrantrieb mit Energieversorgung durch eine Kombination aus chemischem Speicher und Verbrennungsmotor-/Generatoreinheit oder durch eine Kombination aus Schwungradspeicher und Verbrennungsmotor-/Generatoreinheit ausgerüstet ist.

5. Anlage nach den Ansprüchen 3 oder 4,
**dadurch gekennzeichnet,**
daß der elektrische Fahrantrieb (11,13) mit permanentmagnetisch erregten und elektronisch kommutierten Elektromotoren ausgeführt ist.

6. Anlage nach einem der Ansprüche 1 bis 5,
**dadurch gekennzeichnet,**
daß die elektrischen Heizelemente (15a...15d) als Heiz-/Kühlelemente, z.B. als Peltier-Elemente, ausgebildet sind.

7. Anlage nach einem der Ansprüche 1 bis 6,
**dadurch gekennzeichnet,**
daß die Heiz- oder Heiz-/Kühlelemente von einer elektronischen Steuerung (9), vorzugsweise individuell, elektrisch regelbar sind.

8. Anlage nach einem der Ansprüche 1 bis 7,
**dadurch gekennzeichnet,**
daß die Heiz- bzw. die Heiz-/Kühlelemente (15a...15d) abhängig von der im Fahrzeug-Innenraum gewünschten Soll-Temperatur (b) und/oder der im Fahrzeug-Innenraum herrschenden Ist-Temperatur (c) und/oder der Außentemperatur und/oder der verfügbaren elektrischen Leistung geregelt werden.

9. Anlage nach einem der Ansprüche 1 bis 8,
**dadurch gekennzeichnet,**
daß die Nenn-Leistung der Heiz- bzw. der Heiz-/Kühlelemente abhängig von deren Installationsort ausgelegt ist.
